# EUROPÄISCHE PATENTSCHRIFT

(11) **EP 1 815 611 B1**
(45) Veröffentlichungstag und Bekanntmachung des Hinweises auf die Patenterteilung: **25.03.2009**
(21) Anmeldenummer: 05791840.1
(22) Anmeldetag: 06.10.2005
(51) Int. Cl.: H04B 7/005, H04B 7/26

(54) **VEFAHREN ZUR MULTIKODE-TRANSMISSION DURCH EINE TEILNEHMERSTATION**
METHOD FOR MULTICODE TRANSMISSION BY A SUBSCRIBER STATION
PROCEDE DE TRANSMISSION MULTICODE PAR UN POSTE DE RESEAU

(30) Priorität: 11.11.2004 DE 102004054626
(43) Veröffentlichungstag der Anmeldung: 08.08.2007
(73) Patentinhaber: Nokia Siemens Networks GmbH & Co. KG, 81541 München (DE)
(72) Erfinder: BREUER, Volker, 16727 Bötzow (DE); ULRICH, Thomas, 67098 Bad Dürkheim (DE)
(86) Internationale Anmeldenummer: PCT/EP2005/055037
(87) Internationale Veröffentlichungsnummer: WO 2006/051026

(56) Entgegenhaltungen:
- EP-A- 1 154 667
- EP-A- 1 229 755
- EP-A- 1 365 520
- EP-A- 1 564 905
- PATENT ABSTRACTS OF JAPAN Bd. 2003, Nr. 12, 5. Dezember 2003 (2003-12-05) & JP 2004 320164 A (MATSUSHITA ELECTRIC IND CO LTD), 11. November 2004 (2004-11-11)
- PATENT ABSTRACTS OF JAPAN Bd. 1999, Nr. 08, 30. Juni 1999 (1999-06-30) & JP 11 074834 A (NEC CORP), 16. März 1999 (1999-03-16)
- PATENT ABSTRACTS OF JAPAN Bd. 2002, Nr. 08, 5. August 2002 (2002-08-05) & JP 2002 118515 A (OKI ELECTRIC IND CO LTD), 19. April 2002 (2002-04-19)

## Beschreibung

Die Erfindung betrifft Verfahren zum Betreiben eines Funkkommunikationssystems, bei welchen einer Teilnehmerstation ein erster und ein zweiter Kode zur Versendung von Nachrichten zugewiesen sind.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige Teilnehmerstationen oder netzseitige Funkstationen wie Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze wie z.B. WLANs (Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind in der Regel im Vergleich zu üblichen Mobilfunkzellen klein. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Kodebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich.

Bei Kodebereichs-Vielfachzugriffsverfahren werden für die Kommunikation von Teilnehmerstationen teilnehmerspezifische Kodes verwendet, so dass in Abwärtsrichtung die jeweilige Teilnehmerstation bzw. in Aufwärtsrichtung netzseitige Einrichtungen die Nachrichten an die bzw. von der Teilnehmerstation von den Nachrichten an bzw. von anderen Teilnehmerstationen unterscheiden können, indem eine Korrelation zwischen dem empfangenen Signal und dem teilnehmerspezifischen Kode durchgeführt wird. Es ist möglich, dass eine Teilnehmerstation mehrere Kodes zur Versendung von Nachrichten verwendet. In diesem Fall dienen die verschiedenen Kodes zur Unterscheidung von verschiedenen von der Teilnehmerstation genutzten Übertragungskanälen, wie z.B. zur Unterscheidung zwischen Kanälen zur Übertragung von Nutz- und Signalisierungsinformationen, oder zur Unterscheidung von Kanälen verschiedener Dienste.

Der Erfindung liegt die Aufgabe zugrunde, ein effizientes Verfahren zum Betreiben eines Funkkommunikationssystems aufzuzeigen, bei welchem einer Teilnehmerstation ein erster und ein zweiter Kode zur Versendung von Nachrichten zugewiesen sind. Weiterhin sollen Vorrichtungen zur Durchführung des Verfahrens vorgestellt werden.

Diese Aufgabe wird durch Verfahren mit den Merkmalen der Ansprüche 1 und 2, sowie durch Vorrichtungen mit den Merkmalen von nebengeordneten Ansprüchen gelöst. Vorteilhafte Ausgestaltungen und Weiterbildungen sind Gegenstand von Unteransprüchen.

Gemäß dem ersten erfindungsgemäßen Verfahren zum Betreiben eines Funkkommunikationssystems sind einer Teilnehmerstation mehrere Kodes zur Versendung von Nachrichten zugewiesen. Es wird eine Sendeleistungsdifferenz bestimmt, welche von der Teilnehmerstation einzuhalten ist zwischen einerseits der gesamten maximalen Sendeleistung der Teilnehmerstation für die mehreren Kodes und andererseits der gesamten Sendeleistung der Teilnehmerstation für die mehreren Kodes zu Beginn einer Nachrichtenversendung unter Verwendung eines ersten der mehreren Kodes.

Gemäß dem zweiten erfindungsgemäßen Verfahren zum Betreiben eines Funkkommunikationssystems, bei welchem einer Teilnehmerstation mehrere Kodes zur Versendung von Nachrichten zugewiesen sind, wird eine zuvor bestimmte Sendeleistungsdifferenz von der Teilnehmerstation eingehalten zwischen einerseits der gesamten maximalen Sendeleistung der Teilnehmerstation für die mehreren Kodes und andererseits der gesamten Sendeleistung der Teilnehmerstation für die mehreren Kodes zu Beginn einer Nachrichtenversendung unter Verwendung eines ersten der mehreren Kodes.

Der Teilnehmerstation sind zumindest ein erster und ein zweiter Kode zur Versendung von Nachrichten zugewiesen. Bei den unterschiedlichen Kodes kann es sich jeweils um eine Kombination mehrerer Einzelkodes handeln, so z.B. gemäß UMTS um die Kombination aus einem Spreading- und einem Scrambling-Kode. Neben den mehreren Kodes, welche am erfindungsgemäßen Verfahren beteiligt sind, können auch weitere Kodes von der Teilnehmerstation zur Nachrichtenversendung verwendet werden.

Es wird eine Sendeleistungsdifferenz bestimmt, welche von der Teilnehmerstation zwischen einer ersten und einer zweiten Sendeleistung einzuhalten ist. Eine Differenz wird zwischen zwei Werten eingehalten, wenn der Abstand zwischen den beiden Werten größer oder gleich der Differenz ist. Bei der ersten der beiden Sendeleistungen handelt es sich um die gesamte maximale Sendeleistung der Teilnehmerstation für die mehreren Kodes, d.h. um die maximale Sendeleistung, wenn die Teilnehmerstation die mehreren Kodes parallel zur Nachrichtenversendung verwendet. Diese maximale Sendeleistung bei der parallelen Verwendung mehrerer Kodes ist vorzugsweise durch die Hardware der Teilnehmerstation vorgegeben, so z.B. durch den Leistungsverstärker, welcher linear verstärken soll, jedoch im Leistungs-Endbereich eine nicht-lineare Signalverzerrung hervorruft, weshalb er in diesem Endbereich nicht eingesetzt wird. Es ist jedoch auch möglich, dass die maximale Sendeleistung bei der parallelen Verwendung mehrerer Kodes der Teilnehmerstation netzseitig vorgegeben wird.

Bei der zweiten der beiden Sendeleistungen handelt es sich um die gesamte Sendeleistung der Teilnehmerstation für die mehreren Kodes zu Beginn einer Nachrichtenversendung unter Verwendung eines ersten der Kodes. Dies entspricht der Summe aus der Sendeleistung für den ersten Kode und der Sendeleistung für den oder die übrigen Kodes, und zwar jeweils zu dem Zeitpunkt des Beginns der Nachrichtenversendung unter Verwendung des ersten Kodes. Erfolgt exakt zu dem Zeitpunkt des Beginns der Nachrichtenversendung unter Verwendung des ersten Kodes keine Nachrichtenversendung unter Verwendung des oder der übrigen Kodes, sondern erst um eine kurze Zeit später, so kann für die beschriebene Summenbildung die Sendeleistung für den oder die übrigen Kodes zu dem um eine kurze Zeit später liegenden Zeitpunkt verwendet werden.

Werden unter Verwendung des ersten Kodes Nachrichten nicht kontinuierlich, sondern in bestimmten Zeitintervallen versendet, so entspricht der Anfang eines solchen Zeitintervalls dem Beginn der Nachrichtenversendung unter Verwendung des ersten Kodes. Das erfindungsgemäße Verfahren kann in Bezug auf jeden solchen Anfangszeitpunkt, d.h. auf jede Nachrichtenversendung unter Verwendung des ersten Kodes, oder auf eine Teilmenge der Anfangszeitpunkte angewandt werden.

Bei dem betrachteten Funkkommunikationssystem kann es sich um ein zellulares Mobilfunkkommunikationssystem, insbesondere um eine UTMS-Funkkommunikationssystem handeln, oder auch um ein lokales Funkkommunikationssystem.

In Weiterbildung der Erfindung wird die Sendeleistungsdifferenz netzseitig bestimmt und eine Basisstation sendet der Teilnehmerstation eine Nachricht mit Informationen über die bestimmte Sendeleistungsdifferenz. In diesem Fall wird die Sendeleistungsdifferenz nicht von der Teilnehmerstation bestimmt, sondern von einer oder mehreren Einrichtungen des Infrastrukturnetzes des Funkkommunikationssystems, insbesondere von der Basisstation. Der Teilnehmerstation werden nach der netzseitigen Bestimmung Informationen über die bestimmte Sendeleistungsdifferenz mitgeteilt, so dass die Teilnehmerstation den Informationen die Sendeleistungsdifferenz entnehmen kann bzw. die Sendeleistungsdifferenz aus den Informationen ermitteln kann.

Vorteilhaft ist es, wenn die Nachricht an die Teilnehmerstation weiterhin Informationen über eine maximal von der Teilnehmerstation für die Nachrichtenversendung unter Verwendung des ersten Kodes zu verwendende Datenrate enthält.

Einer Ausgestaltung der Erfindung gemäß erfolgt die Bestimmung der Sendeleistungsdifferenz in Abhängigkeit von einer Eigenschaft der Basisstation und/oder der Funkzelle der Basisstation, und/oder von einer Interferenzsituation, und/oder von mindestens einem von der Teilnehmerstation in Anspruch genommenen Dienst, und/oder von einer Klassifizierung der Teilnehmerstation. Somit kann die Sendeleistungsdifferenz unter sonst gleichen Bedingungen von Basisstation zu Basisstation bzw. von Funkzelle zu Funkzelle unterschiedlich bestimmt werden. Bezüglich der Interferenz kann die Interferenz innerhalb der Zelle, welcher die Teilnehmerstation zugeordnet ist, und/oder innerhalb von dieser Zelle benachbarten Zellen berücksichtigt werden. Vorteilhaft ist es insbesondere, die Art des Dienstes, welchen die Teilnehmerstation durch Versendung von Nachrichten unter Verwendung des ersten Kodes nutzt, bei der Bestimmung der Sendeleistungsdifferenz zu berücksichtigen. Teilnehmerstationen können netzseitig klassifiziert bzw. priorisiert sein und gemäß dieser Klassifizierung bei der Bestimmung der Sendeleistungsdifferenz behandelt werden.

In Weiterbildung der Erfindung wird die Sendeleistungsdifferenz von der Teilnehmerstation bestimmt. Diese Bestimmung kann insbesondere in Abhängigkeit von mehreren in der Vergangenheit von der Teilnehmerstation für einen zweiten Kode verwendeten Sendeleistungen erfolgen, insbesondere unter Verwendung der Varianz dieser Sendeleistungen. Diese Berücksichtigung der in der Vergangenheit verwendeten Sendeleistungen kann auch indirekt sein, indem von der Teilnehmerstation empfangene Leistungsregelungsinformationen bezüglich der für den zweiten Kode verwendeten Sendeleistungen verwendet werden.

Die erfindungsgemäße netzseitige Einrichtung und die erfindungsgemäße Teilnehmerstation weisen Mittel auf zum Bestimmen einer Sendeleistungsdifferenz, welche von der Teilnehmerstation einzuhalten ist zwischen einerseits der gesamten maximalen Sendeleistung der Teilnehmerstation für die mehreren Kodes und andererseits der gesamten Sendeleistung der Teilnehmerstation für die mehreren Kodes zu Beginn einer Nachrichtenversendung unter Verwendung eines ersten der mehreren Kodes.

Die erfindungsgemäße Teilnehmerstation kann zusätzlich oder alternativ Mittel aufweisen zum Einhalten einer zuvor bestimmten Sendeleistungsdifferenz zwischen einerseits der gesamten maximalen Sendeleistung der Teilnehmerstation für die mehreren Kodes und andererseits der gesamten Sendeleistung der Teilnehmerstation für die mehreren Kodes zu Beginn einer Nachrichtenversendung unter Verwendung eines ersten der mehreren Kodes.

Sowohl die erfindungsgemäße netzseitige Einrichtung als auch die erfindungsgemäße Teilnehmerstation eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigt:

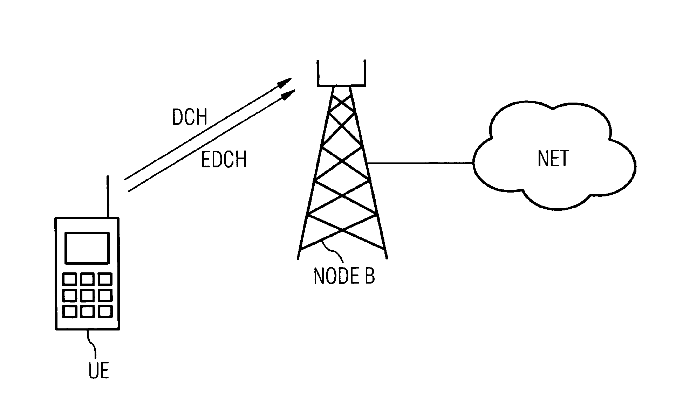

- Figur 1:: einen Ausschnitt aus einem Funkkommunikationssystem.

Figur 1 zeigt einen Ausschnitt aus einem UMTS-Funkkommunikationssystem, umfassend die Teilnehmerstation UE (UE: User Equipment) und die Basisstation NODE B. Die Basisstation NODE B ist mit weiteren netzseitigen Einrichtungen des Infrastrukturnetzes NET verbunden. In Aufwärtsrichtung (englisch: Uplink, UL) erfolgt die Kommunikation, d.h. die Nachrichtenversendung von der Teilnehmerstation UE an die Basisstation NODE B, auf einem dedizierten Kanal (englisch: dedicated channel), beschrieben z.B. in [3GPP TS 25.211 V6.2.0, 3rd Generation Partnership Project; Technical Specification Group Radio Access Network; Physical channels and mapping of transport channels onto physical channels (FDD)]. Hierzu ist der Teilnehmerstation UE der Kode DCH zugewiesen. Insbesondere zur Übertragung von hochbitratigem Verkehr ist der Teilnehmerstation UE ein zweiter Kode EDCH (Enhanced Dedicated Uplink Channel) zugewiesen.

Zur Leistungsregelung gemäß einer geschlossenen Schleife zur Leistungssteuerung (closed loop power control) sendet die Basisstation NODE B der Teilnehmerstation UE regelmäßig Anweisungen zur Leistungsregelung, die TPC-Bits, d.h. Informationen, ob die Sendeleistung von der Teilnehmerstation UE zu erhöhen oder zu erniedrigen ist. Für die Teilnehmerstation UE existiert ein Maximalwert der Sendeleistung, welcher nicht überschritten werden kann. Bei schlechter werdenden Funkübertragungsbedingungen wird die Teilnehmerstation UE von der Basisstation NODE B aufgefordert, ihre Sendeleistung zu erhöhen. Diese Erhöhung kann höchstens bis zum Maximalwert der Sendeleistung der Teilnehmerstation UE erfolgen. Empfängt die Teilnehmerstation UE nach Erreichen des Maximalwertes ihrer Sendeleistung eine weitere Aufforderung zur Steigerung ihrer Sendeleistung, so kann sie den von ihr verwendeten TFC (TFC: Transport Format Combination) anpassen. Der TFC gibt für jeden physikalischen Kanal das Verhältnis der kodierten Daten, d.h. der Gesamtdaten, zu den Nutzdaten, und somit die Datenrate an. Bei gegebenem Funkkanal ist jeder TFC eindeutig mit einer Sendeleistung verknüpft. Bei konstanten Funkverkehrsbedingungen entspricht daher ein Wechsel zu einem TFC mit einer niedrigeren Datenrate einem Wechsel zu einer niedrigeren Sendeleistung. Um der Aufforderung der Basisstation NODE B nach einer Sendeleistungssteigerung nachzukommen, kann die Teilnehmerstation UE somit zu einem TFC mit niedrigerer Datenrate wechseln und die Sendeleistung unverändert lassen bzw. reduzieren. Der Wechsel eines TFC kann nur zu bestimmten Zeitpunkten stattfinden, und zwar an bestimmten TTI-Grenzen (TTI: Transmission Time Interval).

Verwendet die Teilnehmerstation UE nicht nur den Kode DCH, sondern die beiden Kodes EDCH und DCH parallel, so tritt die Situation, dass die Teilnehmerstation UE den Maximalwert ihrer Sendeleistung erricht, öfter ein, als wenn die Teilnehmerstation UE nur den Kode DCH einsetzt. Dies hat folgende Gründe:
● Die gesamte Sendeleistung der Teilnehmerstation UE bei Verwendung mehrerer Kodes ergibt sich aus der Summe der Sendleistungen der einzelnen Kodes. Daher ist die gesamte Sendeleistung der Teilnehmerstation UE im Schnitt umso höher, je mehr Kodes sie verwendet.
● Der Kode EDCH soll dazu verwendet werden, hochbitratige Datenpakete an die Basisstation NODE B zu versenden. Gemäß der Verknüpfung zwischen Datenrate und Sendeleistung über den TFC benötigt die Teilnehmerstation UE für den Kode EDCH eine höhere Sendeleistung als für den Kode DCH.
● Verwendet die Teilnehmerstation UE die beiden Kodes EDCH und DCH parallel, so kann der Maximalwert der Sendeleistung gegenüber dem Fall, dass sie lediglich den Kode DCH verwendet, reduziert sein. Dies liegt darin begründet, dass bei einer Multikode-Transmission der PAR-Wert (PAR: Peak to A-verage Ratio) verschlechtert sein kann. Diese Reduzierung der maximalen Sendeleistung bei einer Multikode-Transmission gilt für die meisten Teilnehmerstationen; sollte diese Verringerung vermieden werden, wären höhere Anforderungen an die Linearität der Verstärker der Teilnehmerstationen erforderlich.

Die Länge einer EDCH-Nachricht (TTI: Transmission Time Interval) beträgt 10ms. Während dieser Zeit empfängt die Teilnehmerstation UE 15 TPC-Bits. Der TFC für den Kode EDCH kann während der TTI nicht gewechselt werden, d.h. die Teilnehmerstation UE kann auf eine Anweisung der Basisstation NODE B zur Steigerung ihrer Sendeleistung lediglich mit einer Erhöhung der Sendeleistung reagieren, eine Anpassung des TFC für den Kode EDCH ist während der Übertragung einer EDCH-Nachricht nicht möglich. Eine andere Möglichkeit, um auf die Aufforderung der Basisstation NODE B zur Steigerung der Sendeleistung zu reagieren, ist die Anpassung des TFC für den Kode DCH. Dieser kann von der Teilnehmerstation UE zu Beginn eines TTI für den Kode DCH gewechselt werden. Die Zeitpunkte des TTI-Beginns der beiden Kodes DCH und EDCH können sich voneinander unterscheiden. Somit ist es möglich, dass die Teilnehmerstation UE der Aufforderung zur Steigerung der Sendeleistung während der Versendung einer EDCH-Nachricht dadurch nachkommt, dass der TFC für den Kode DCH geändert wird und somit eine Steigerung der Sendeleistung für den Kode EDCH erfolgen kann, falls eine geeignete TTI-Grenze zur Umschaltung des TFC vorhanden ist. Dies ist jedoch nur möglich, wenn die Teilnehmerstation UE für den Kode DCH nicht bereits die geringst möglich Datenrate verwendet. Dieser kleinste der geringst möglichen Datenrate entsprechende TFC wird von der Teilnehmerstation UE jedoch immer dann eingesetzt, wenn sie wenige Daten mit dem Kode DCH zu versenden hat.

Erreicht die Teilnehmerstation UE bei Verwendung der beiden Kodes EDCH und DCH den (reduzierten) Maximalwert der Sendeleistung während der Versendung einer EDCH-Nachricht, und empfängt sie Anweisungen der Basisstation NODE B zur kontinuierlichen Steigerung ihrer Sendeleistung, so muss sie die Versendung der EDCH-Nachricht vor dem Ende der EDCH-Nachricht abbrechen, falls nicht eine Anpassung des TFC des Kodes DCH möglich ist. Ein Abbruch der Nachrichtenversendung des Kodes DCH ist nicht möglich, denn wenn die Basisstation NODE B die Nachrichten des Kodes DCH nicht mehr empfangen kann, wird die Verbindung zwischen der Basisstation NODE B und der Teilnehmerstation UE unterbrochen, so dass die Aufrechterhaltung der Kommunikation unter Verwendung des Kodes DCH für die Erhaltung der Verbindung zwischen Teilnehmerstation UE und Basisstation NODE B unerlässlich ist. Ein Abbruch der Versendung der EDCH-Nachricht bedeutet eine Verschwendung von Funkressourcen, da die nicht vollständige EDCH-Nachricht netzseitig nicht ausgewertet werden kann, jedoch durch die nicht vollständige Versendung der EDCH-Nachricht Interferenz erzeugt wurde.

Der Teilnehmerstation UE wird von der Basisstation NODE B vor der Versendung einer EDCH-Nachricht mitgeteilt, welcher TFC für diese Versendung maximal verwendet werden darf, d.h. die maximal mögliche Datenrate für die EDCH-Nachricht. Die Teilnehmerstation UE legt vor der Versendung der EDCH-Nachricht einen TFC fest, welcher für die EDCH-Nachricht verwendet wird, wobei die ihr von der Basisstation NODE B zugewiesene maximale Datenrate nicht überschritten werden darf. Entsprechend den Funkverkehrsbedingungen bzw. dem Funkkanal zwischen der Teilnehmerstation UE und der Basisstation NODE B ist mit dem ausgewählten TFC bei konstanten Ausbreitungsbedingungen eine bestimmte Sendeleistung für die Versendung der EDCH-Nachricht verknüpft.

Wählt die Teilnehmerstation UE eine hohe Datenrate und somit eine hohe Sendeleistung für die Versendung der EDCH-Nachricht aus, so besteht die Möglichkeit, dass sie mehrmals während der Versendung der EDCH-Nachricht eine Aufforderung zur Steigerung der Sendeleistung empfängt, was schließlich wie oben beschrieben zum Abbruch der Übertragung der EDCH-Nachricht führen kann, da die maximale Sendeleistung der Teilnehmerstation UE überschritten werden müsste. Wählt die Teilnehmerstation UE hingegen eine niedrige Datenrate und somit eine niedrige Sendeleistung für die Versendung der EDCH-Nachricht, so besteht die Möglichkeit, dass bei wenigen Aufforderungen zur Steigerung der Sendeleistung ein großer Teil der gesamten der Teilnehmerstation UE zur Verfügung stehenden Sendeleistung nicht ausgenutzt wird, und somit für die EDCH-Nachricht eine niedrigere Datenrate angewendet wurde als möglich gewesen und aus Sicht der Teilnehmerstation UE wünschenswert wäre. Bei der Auswahl des TFC für die Versendung einer EDCH-Nachricht muss somit ein Kompromiss gefunden werden zwischen einer hohen Datenrate für die EDCH-Nachricht und einer zuverlässigen, d.h. vollständigen, Übertragung der EDCH-Nachricht.

Zur Lösung dieses Problems schlägt die Erfindung vor, dass von der Basisstation NODE B eine Sendeleistungsdifferenz bestimmt wird, welche von der Teilnehmerstation UE einzuhalten ist. Diese Sendeleistungsdifferenz, welche als "Power-Headroom" bezeichnet werden kann, soll zwischen der Gesamtsendeleistung für die beiden Kodes DCH und EDCH zu Beginn der Versendung einer EDCH-Nachricht und der maximalen Sendeleistung für die beiden Kodes DCH und EDCH bestehen. Somit entspricht die Sendeleistungsdifferenz einer zu Beginn der Versendung einer EDCH-Nachricht ungenutzten Sendeleistung. Zur Illustration wird ein Zahlenbeispiel betrachtet:
● Die maximale Sendeleistung der Teilnehmerstation UE bei Verwendung lediglich des Kodes DCH, d.h. ohne Multikode-Transmission, betrage 21 dBm.
● Die maximale Sendeleistung der Teilnehmerstation UE bei Verwendung der beiden Kodes DCH und EDCH sei um 3 dB gegenüber der maximalen Sendeleistung bei Verwendung nur eines Kodes verringert, d.h. sie beträgt 21 dBm - 3 dB = 18 dBm.
● Für den Kode DCH verwende die Teilnehmerstation UE die minimal mögliche Datenrate, dies entspreche einer Sendeleistung für den Kode DCH von 3 dBm bei einer bestimmten angenommen Funk-Ausbreitungsbedingung. Für den Kode EDCH stehen somit maximal 18 dBm - 3 dB = 15 dBm zur Verfügung.
● Die Basisstation NODE B gebe der Teilnehmerstation UE eine Sendeleistungsdifferenz von 8 dB vor. Somit ergibt sich die maximal von der Teilnehmerstation UE anzuwendende Sendeleistung zu Beginn der Versendung der EDCH-Nachricht gemäß: 18 dBm - 3 dB - 8 dB = 7 dBm.

Die Bestimmung der Sendeleistungsdifferenz in der Basisstation NODE B kann abhängig von mehreren Parametern erfolgen:
● Die Art der Zelle der Basisstation NODE B.
   Es kann unterschieden werden zwischen "capacity limited" und "coverage limited" Zellen. Bei einer "capacity limited" Zelle handelt es sich um eine Zelle, bei welcher die unter die Teilnehmerstationen aufzuteilende Sendeleistung der Basisstation in Abwärtsrichtung der limitierende Faktor für die Zellgröße ist. Dies trifft meist auf kleine Zellen im städtischen Bereich zu. Die Teilnehmerstationen in diesen Zellen senden meist mit geringer Sendeleistung, so dass ein
   Erreichen der maximalen Sendeleistung der Teilnehmerstationen selten auftritt. Für eine "capacity limited" Zelle muss somit kein großer "Power Headroom" eingestellt werden, eine Basisstation einer "capacity limited" Zelle bestimmt daher nur geringe Sendeleistungsdifferenzen. Bei einer "coverage limited" Zelle handelt es sich um eine Zelle, bei welcher die Sendeleistung der Teilnehmerstationen in Aufwärtsrichtung der limitierende Faktor für die Zellgröße ist. Dies trifft meist auf große Zellen in ländlichen Bereichen zu.
   Da die Teilnehmerstationen einer "coverage limited" Zelle häufig ihre maximale Sendeleistung erreichen, sollte zu Beginn der Versendung einer EDCH-Nachricht ein großer "Power Headroom" eingestellt werden, so dass ausreichende Möglichkeiten für die Steigerung der Sendeleistung während der Übertragung der EDCH-Nachricht vorhanden sind. Eine Basisstation einer "coverage limited" Zelle wird daher hohe Sendeleistungsdifferenzen bestimmen.
● Die aktuelle Interferenzsituation in der Zelle oder in einem mehrere Zellen umfassenden Gebiet.
   Je größer die aktuelle Interferenz in einer Zelle und/oder in den umliegenden Zellen ist, desto höher sollten die Sendeleistungsdifferenzen festgelegt werden. Dies hat zur Folge, dass Teilnehmerstationen, welche sich in der Nähe der empfangenden Basisstation befinden und somit eine geringe Sendeleistung benötigen und daher wenig Interferenz erzeugen, bevorzugt werden, d.h. größere Datenraten bei den EDCH-Nachrichten erzielen als die weiter entfernten Teilnehmerstationen. Aufgrund der Tatsache, dass die Teilnehmerstationen in der Nähe der Basisstation für hohe Datenrate nur niedrige Sendeleistungen anwenden müssen, erfahren ihre EDCH-Übertragungen durch große Sendeleistungsdifferenzen kaum Einschränkungen. Hingegen werden Teilnehmerstationen, welche weit von der Basisstation entfernt sind, bezüglich der Versendung von EDCH-Nachrichten eingeschränkt, da aufgrund der großen Entfernung zur empfangenden Basisstation bzw. während dem Soft-Handover zu den empfangenden Basisstationen und der hohen Sendeleistungsdifferenz lediglich eine geringe Datenrate für die EDCH-Nachrichten möglich ist, so dass manche dieser Teilnehmerstationen auf die Versendung von EDCH-Nachrichten verzichten müssen. Somit erzeugen diese Teilnehmerstationen wenig Interferenz in den umliegenden Zellen. Die Festlegung der Sendeleistungsdifferenz stellt somit ein Mittel zur Steuerung der Interzell-Interferenz dar.
● Der von einer Teilnehmerstation in Anspruch genommene Dienst bezüglich des Kodes EDCH.
   Es kann unterschieden werden zwischen zwei Grundtypen von Diensten. Zum einen existieren Dienste, bei welchen eine Mindestdienstrate garantiert wird (englisch: GBR, Guaranteed Bit Rate). Hierbei kann es sich um Echtzeit-Dienste handeln, bei welchen eine zuverlässige Übertragung notwendig ist, wie z.B. Videotelephonie und Online Gaming. Bei diesen Diensten sollte eine hohe Sendeleistungsdifferenz festgelegt werden, so dass auch bei Verschlechterung des Funkkanals während der Versendung einer EDCH-Nachricht dies durch eine Steigerung der Sendeleistung aufgefangen werden und die EDCH-Nachricht abbruchfrei übertragen werden kann.
   Zum anderen existieren Dienste, bei welchen eine hohe Datenrate erforderlich ist, während ein gelegentlicher Abbruch der Versendung einer EDCH-Nachricht sich nicht allzu negativ auswirkt. Die abgebrochenen EDCH-Nachrichten können zu einem späteren Zeitpunkt vollständig versendet werden. Beispiele hierfür sind Nicht-Echtzeit-Spiele. Bei letzteren Diensten sollte eine niedrige Sendeleistungsdifferenz festgelegt werden, so dass für die EDCH-Nachrichten eine hohe Datenrate (englisch: maximum throughput) erzielbar ist.
● Die Strategie des Netzbetreibers bezüglich des EDCH.
   Soll insgesamt ein hoher Datendurchsatz (englisch: throughput) für alle Nutzer über den EDCH erreicht werden, so sollten im niedrige Sendeleistungsdifferenzen von den Basisstationen bestimmt werden.
● Die Klasse der Teilnehmerstation.
   Die Teilnehmerstationen können klassifiziert werden, wobei Teilnehmerstationen einer höher priorisierten Klasse eine niedrigere Sendeleistungsdifferenz einhalten müssen als Teilnehmerstationen einer niedriger priorisierten Klasse. Beispielsweise können Schwellenwerte als Maximalwerte der Sendeleistungsdifferenz für Teilnehmerstationen bestimmter Klassen zum Einsatz kommen. Das Absinken der Sendeleistungsdifferenz mit steigender Priorität der Teilnehmerstationen lässt sich damit begründen, dass die Basisstation die für den EDCH tolerierbare Gesamtinterferenz an ihrem Empfänger für den EDCH-Kanal aller Teilnehmerstationen zwischen den Teilnehmerstationen aufteilen muss. Insbesondere die Teilnehmerstationen, welche weit von der Basisstation entfernt sind, erzeugen ein erhöhtes Maß an Interferenz.
   Durch eine niedrige Sendeleistungsdifferenz wird einer hoch priorisierten Teilnehmerstation ein großer Anteil an der zwischen den Teilnehmerstationen aufzuteilenden Interferenz zugeteilt. Bei einer hohen einzuhaltenden Sendeleistungsdifferenz kann eine Teilnehmerstation entscheiden, dass die jeweilige Datenrate für die EDCH-Nachricht so klein ist, dass sie auf die Versendung der EDCH-Nachricht verzichtet. Wird dann, wenn eine hohe Interferenz vorhanden ist, für die Teilnehmerstationen ein hoher Wert für die Sendeleistungsdifferenz bestimmt, so ist es zu diesen Zeiten möglich, dass eine Versendung von EDCH-Nachrichten nur durch Teilnehmerstationen erfolgt, welche hoch priorisiert sind, da für die niedriger priorisierten Teilnehmerstationen die bestimmte Sendeleistungsdifferenz zu hoch für die Versendung einer EDCH-Nachricht ist. Die Klassifizierung kann sich auf die Vergebührung (englisch: Billing) des jeweiligen Teilnehmers auswirken.

Bei der Bestimmung der Sendeleistungsdifferenz kann die Basisstation NODE B einen der beschriebenen Parameter oder auch Kombinationen der Parameter verwenden. Die Bestimmung kann teilnehmerstationsspezifisch, d.h. für einzelne Teilnehmerstationen, erfolgen, oder auch für eine Gruppe von Teilnehmerstationen oder alle Teilnehmerstationen, welche einen Kode EDCH nutzen.

Die Sendeleistungsdifferenz wird der Teilnehmerstation UE von der Basisstation NODE B signalisiert. Es ist möglich, dass die Teilnehmerstation UE die Sendeleistungsdifferenz exakt einzuhalten hat, d.h. dass die Summe aus den Sendeleistungen für die beiden Kodes DCH und EDCH zu Beginn der Versendung der EDCH-Nachricht sich genau um die Sendeleistungsdifferenz von der maximalen für die beiden Kodes DCH und EDCH zur Verfügung stehenden Sendeleistung unterscheidet, oder dass die von der Basisstation NODE B bestimmte Sendeleistungsdifferenz einen Mindestwert darstellt, welcher mindestens zwischen der Summe aus den Sendeleistungen für die beiden Kodes DCH und EDCH zu Beginn der Versendung der EDCH-Nachricht und der maximalen für die beiden Kodes DCH und EDCH zur Verfügung stehenden Sendeleistung vorhanden sein muss. Die Signalisierung der bestimmten Sendeleistungsdifferenz kann unter Verwendung einer eigens für diese Zwecke eingeführten Nachricht erfolgen, die Information über die Sendeleistungsdifferenz kann jedoch auch in eine andere Nachricht integriert werden. Insbesondere ist es vorteilhaft, wenn eine Nachricht von der Basisstation NODE B an die Teilnehmerstation UE gesendet wird, welche sowohl die Angabe der einzuhaltenden Sendeleistungsdifferenz, als auch die Angabe des TFC mit der maximalen Datenrate, welche von der Teilnehmerstation UE für die jeweilige Versendung der EDCH-Nachricht verwendet werden darf, beinhaltet. Wird die gleiche Sendeleistungsdifferenz für eine Mehrzahl von Teilnehmerstationen bestimmt, so können diese in einer gemeinsamen Benachrichtigung über die bestimmte Sendeleistungsdifferenz informiert werden.

Während der Fall beschrieben wurde, dass die Sendeleistungsdifferenz durch die Basisstation bestimmt wird, kann diese Bestimmung auch durch eine die Basisstation NODE B kontrollierende Einrichtung, wie z.B. durch einen CRNC (Controlling RNC) erfolgen. Diese Einrichtung informiert die Basisstation NODE B dann über die bestimmte Sendeleistungsdifferenz. Die Information über die bestimmte Sendeleistungsdifferenz ist vorzugsweise wie oben in Bezug auf die Nachrichtenübertragung zwischen Basisstation und Teilnehmerstation beschrieben in einer Nachricht enthalten, welche auch die Angabe des TFC mit der maximalen Datenrate, welche von der Teilnehmerstation für die jeweilige Versendung der EDCH-Nachricht verwendet werden darf, umfasst.

Alternativ zur Bestimmung der Sendeleistungsdifferenz durch die Basisstation NODE B kann die Bestimmung der Sendeleistungsdifferenz durch die Teilnehmerstation UE erfolgen. Hierbei kann die Teilnehmerstation UE die in der Vergangenheit empfangenen Anweisungen zur Sendeleistungsregelung in Bezug auf den Kode DCH, d.h. die TPC-Bits, berücksichtigen. Liegt die Sendeleistung für den Kode DCH innerhalb eines bestimmten Zeitraums in der Vergangenheit beispielsweise in der Spanne zwischen -10 dBm und +10 dBm, d.h. weist die Sendeleistung für den Kode DCH eine große Varianz auf, so wird die Sendeleistungsdifferenz von der Teilnehmerstation UE höher bestimmt als bei einer kleinen Varianz, so z.B. wenn die Sendeleistung für den Kode DCH innerhalb des bestimmten Zeitraums in der Vergangenheit in der Spanne zwischen -3 dBm und +3 dBm liegt. Somit wird die Varianz der Sendeleistungen eines ersten Kanals, des Kodes DCH, zur Ermittlung der Sendeleistung für einen zweiten Kanal, für den Kode EDCH, eingesetzt. Den konkreten Wert für die Sendeleistung des Kodes EDCH bestimmt die Teilnehmerstation aus der Sendeleistungsdifferenz, dem aktuellen Wert der Sendeleistung für den Kode DCH, dem TFC für den Kode EDCH, dessen Maximalwert ihr von der Basisstation NODE B vorgegebenen ist, ihrer maximalen Sendeleistung bei Multikode-Transmission und den aktuellen Funkübertragungsbedingungen.

## Patentansprüche

1. Verfahren zum Betreiben eines Funkkommunikationssystems, bei welchem einer Teilnehmerstation (UE) mehrere Kodes (EDCH, DCH) zur Versendung von Nachrichten zugewiesen sind, bei dem
eine Sendeleistungsdifferenz bestimmt wird, welche von der Teilnehmerstation (UE) einzuhalten ist zwischen einerseits der gesamten maximalen Sendeleistung der Teilnehmerstation (UE) für die mehreren Kodes (EDCH, DCH) und andererseits der gesamten Sendeleistung der Teilnehmerstation (UE) für die mehreren Kodes (EDCH, DCH) zu Beginn einer Nachrichtenversendung unter Verwendung eines ersten (EDCH) der mehreren Kodes (EDCH, DCH).

2. Verfahren zum Betreiben eines Funkkommunikationssystems, bei welchem einer Teilnehmerstation (UE) mehrere Kodes (EDCH, DCH) zur Versendung von Nachrichten zugewiesen sind, bei dem
eine zuvor bestimmte Sendeleistungsdifferenz von der Teilnehmerstation (UE) eingehalten wird zwischen einerseits der gesamten maximalen Sendeleistung der Teilnehmerstation (UE) für die mehreren Kodes (EDCH, DCH) und andererseits der gesamten Sendeleistung der Teilnehmerstation (UE) für die mehreren Kodes (EDCH, DCH) zu Beginn einer Nachrichtenversendung unter Verwendung eines ersten (EDCH) der mehreren Kodes (EDCH, DCH).

3. Verfahren nach Anspruch 1 oder 2, bei dem
die Sendeleistungsdifferenz netzseitig bestimmt wird und eine Basisstation (NODE B) der Teilnehmerstation (UE) eine Nachricht mit Informationen über die bestimmte Sendeleistungsdifferenz sendet.

4. Verfahren nach Anspruch 3,bei dem
die Nachricht an die Teilnehmerstation (UE) Informationen über eine maximal von der Teilnehmerstation (UE) für die Nachrichtenversendung unter Verwendung des ersten Kodes (EDCH) zu verwendende Datenrate enthält.

5. Verfahren nach Anspruch 3 oder 4,bei dem
die Bestimmung der Sendeleistungsdifferenz erfolgt in Abhängigkeit von
● einer Eigenschaft der Basisstation (NODE B) und/oder der Funkzelle der Basisstation (NODE B), und/oder
● einer Interferenzsituation, und/oder
● mindestens einem von der Teilnehmerstation (UE) in Anspruch genommenen Dienst, und/oder
● einer Klassifizierung der Teilnehmerstation (UE).

6. Verfahren nach Anspruch 1 oder 2,bei dem
die Sendeleistungsdifferenz von der Teilnehmerstation (UE) bestimmt wird.

7. Verfahren nach Anspruch 6,bei dem
die Bestimmung der Sendeleistungsdifferenz erfolgt in Abhängigkeit von mehreren in der Vergangenheit von der Teilnehmerstation (UE) für einen zweiten (DCH) der mehreren Kodes (EDCH, DCH) verwendeten Sendeleistungen.

8. Verfahren nach einem der Ansprüche 1 bis 7, bei dem
es sich bei dem Funkkommunikationssystem um ein UMTS-Funkkommunikationssystem handelt.

9. Netzseitige Einrichtung, insbesondere Basisstation (NODE B), für ein Funkkommunikationssystem,
bei welchem einer Teilnehmerstation (UE) mehrere Kodes (EDCH, DCH) zur Versendung von Nachrichten zugewiesen sind,
mit Mitteln zum Bestimmen einer Sendeleistungsdifferenz, welche von der Teilnehmerstation (UE) einzuhalten ist zwischen einerseits der gesamten maximalen Sendeleistung der Teilnehmerstation (UE) für die mehreren Kodes (EDCH, DCH) und andererseits der gesamten Sendeleistung der Teilnehmerstation (UE) für die mehreren Kodes (EDCH, DCH) zu Beginn einer Nachrichtenversendung unter Verwendung eines ersten (EDCH) der mehreren Kodes (EDCH, DCH).

10. Teilnehmerstation (UE) für ein Funkkommunikationssystem,
welcher mehrere Kodes (EDCH, DCH) zur Versendung von Nachrichten zugewiesen sind,
mit Mitteln zum Bestimmen einer Sendeleistungsdifferenz, welche von der Teilnehmerstation (UE) einzuhalten ist zwischen einerseits der gesamten maximalen Sendeleistung der Teilnehmerstation (UE) für die mehreren Kodes (EDCH, DCH) und andererseits der gesamten Sendeleistung der Teilnehmerstation (UE) für die mehreren Kodes (EDCH, DCH) zu Beginn einer Nachrichtenversendung unter Verwendung eines ersten (EDCH) der mehreren Kodes (EDCH, DCH).

11. Teilnehmerstation (UE) für ein Funkkommunikationssystem,
insbesondere nach Anspruch 10, welcher mehrere Kodes (EDCH, DCH) zur Versendung von Nachrichten zugewiesen sind,
mit Mitteln zum Einhalten einer zuvor bestimmten Sendeleistungsdifferenz zwischen einerseits der gesamten maximalen Sendeleistung der Teilnehmerstation (UE) für die mehreren Kodes (EDCH, DCH) und andererseits der gesamten Sendeleistung der Teilnehmerstation (UE) für die mehreren Kodes (EDCH, DCH) zu Beginn einer Nachrichtenversendung unter Verwendung eines ersten (EDCH) der mehreren Kodes (EDCH, DCH).

## Claims

1. Method for operating a radio communication system in which a number of codes (EDCH, DCH) for sending out messages are assigned to a subscriber station (UE), in which
a transmission power difference is determined which is to be maintained by the subscriber station (UE) between, on the one hand, the entire maximum transmission power of the subscriber station (UE) for the several codes (EDCH, DCH), and, on the other hand, the entire transmission power of the subscriber station (UE) for the several codes (EDCH, DCH), at the beginning of a message transmission by using a first one (EDCH) of the several codes (EDCH, DCH).

2. Method for operating a radio communication system in which several codes (EDCH, DCH) for sending out messages are assigned to a subscriber station (UE), in which
a previously determined transmission power difference is maintained by the subscriber station (UE) between, on the one hand, the entire maximum transmission power of the subscriber station (UE) for the several codes (EDCH, DCH) and, on the other hand, the entire transmission power of the subscriber station (UE) for the several codes (EDCH, DCH) at the beginning of a message transmission by using a first one (EDCH) of the several codes (EDCH, DCH).

3. Method according to Claim 1 or 2, in which
the transmission power difference is determined at the network end and a base station (NODE B) sends to the subscriber station (UE) a message with information about the transmission power difference determined.

4. Method according to Claim 3, in which
the message to the subscriber station (UE) contains information about a maximum data rate to be used by the subscriber station (UE) for the message transmission by using the first code (EDCH).

5. Method according to Claim 3 or 4, in which
the transmission power difference is determined in dependence on
● a characteristic of the base station (NODE B) and/or of the radio cell of the base station (NODE B), and/or
● an interference situation, and/or
● at least one service used by the subscriber station (UE), and/or
● a classification of the subscriber station (UE).

6. Method according to Claim 1 or 2, in which
the transmission power difference is determined by the subscriber station (UE).

7. Method according to Claim 6, in which
the transmission power difference is determined in dependence on several transmission powers used in the past by the subscriber station (UE) for a second one (DCH) of the several codes (EDCH, DCH).

8. Method according to one of Claims 1 to 7, in which
the radio communication system is a UMTS radio communication system.

9. Network-side facility, particularly base station (NODE B) for a radio communication system,
in which several codes (EDCH, DCH) are assigned to a subscriber station (UE) for sending out messages,
with means for determining a transmission power difference which is to be maintained by the subscriber station (UE) between, on the one hand, the entire maximum transmission power of the subscriber station (UE) for the several codes (EDCH, DCH) and, on the other hand, the entire transmission power of the subscriber station (UE) for the several codes (EDCH, DCH) at the beginning of a message transmission by using a first one (EDCH) of the several codes (EDCH, DCH).

10. Subscriber station (UE) for a radio communication system to which several codes (EDCH, DCH) are assigned for sending out messages,
with means for determining a transmission power difference which is to be maintained by the subscriber station (UE) between, on the one hand, the entire maximum transmission power of the subscriber station (UE) for the several codes (EDCH, DCH) and, on the other hand, the entire transmission power of the subscriber station (UE) for the several codes (EDCH, DCH) at the beginning of a message transmission by using a first one (EDCH) of the several codes (EDCH, DCH).

11. Subscriber station (UE) for a radio communication system, particularly in accordance with Claim 10, to which several codes (EDCH, DCH) are assigned for sending out messages,
with means for maintaining a previously determined transmission power difference between, on the one hand, the entire maximum transmission power of the subscriber station (UE) for the several codes (EDCH, DCH) and, on the other hand, the entire transmission power of the subscriber station (UE) for the several codes (EDCH, DCH) at the beginning of a message transmission by using a first one (EDCH) of the several codes (EDCH, DCH).

## Revendications

1. Procédé d'exploitation d'un système de radiocommunication, dans lequel plusieurs codes (EDCH, DCH) sont attribués à une station d'abonné (UE) pour l'envoi de messages, dans lequel
on détermine une différence de puissance d'émission qui doit être observée par la station d'abonné (UE) entre d'une part la puissance d'émission maximale totale de la station d'abonné (UE) pour les plusieurs codes (EDCH, DCH) et d'autre part la puissance d'émission totale de la station d'abonné (UE) pour les plusieurs codes (EDCH, DCH) au début d'un envoi de message en utilisant un premier (EDCH) des plusieurs codes (EDCH, DCH).

2. Procédé d'exploitation d'un système de radiocommunication, dans lequel plusieurs codes (EDCH, DCH) sont attribués à une station d'abonné (UE) pour l'envoi de messages, dans lequel
une différence de puissance d'émission préalablement déterminée est observée par la station d'abonné (UE) entre d'une part la puissance d'émission maximale totale de la station d'abonné (UE) pour les plusieurs codes (EDCH, DCH) et d'autre part la puissance d'émission totale de la station d'abonné (UE) pour les plusieurs codes (EDCH, DCH) au début d'un envoi de message en utilisant un premier (EDCH) des plusieurs codes (EDCH, DCH).

3. Procédé selon la revendication 1 ou 2, dans lequel
la différence de puissance d'émission est déterminée du côté du réseau et une station de base (NODE B) envoie à la station d'abonné (UE) un message contenant des informations sur la différence de puissance d'émission déterminée.

4. Procédé selon la revendication 3, dans lequel
le message envoyé à la station d'abonné (UE) contient des informations sur un débit de données maximal à utiliser par la station d'abonné (UE) pour l'envoi d'un message en utilisant le premier code (EDCH).

5. Procédé selon la revendication 3 ou 4, dans lequel
la détermination de la différence de puissance d'émission s'effectue en fonction
● d'une caractéristique de la station de base (NODE B) et/ou de la cellule radio de la station de base (NODE B) et/ou
● d'une situation d'interférence et/ou
● d'au moins un service utilisé par la station d'abonné (UE) et/ou
● d'une classification de la station d'abonné (UE).

6. Procédé selon la revendication 1 ou 2, dans lequel
la différence de puissance d'émission est déterminée par la station d'abonné (UE).

7. Procédé selon la revendication 6, dans lequel
la détermination de la différence de puissance d'émission s'effectue en fonction de plusieurs puissances d'émission utilisées par le passé par la station d'abonné (UE) pour un deuxième (DCH) des plusieurs codes (EDCH, DCH).

8. Procédé selon l'une des revendications 1 à 7, dans lequel
il s'agit, concernant le système de radiocommunication, d'un système de radiocommunication UMTS.

9. Dispositif côté réseau, notamment station de base (NODE B), pour un système de radiocommunication,
dans lequel plusieurs codes (EDCH, DCH) sont attribués à une station d'abonné (UE) pour l'envoi de messages,
comprenant des moyens pour déterminer une différence de puissance d'émission qui doit être observée par la station d'abonné (UE) entre d'une part la puissance d'émission maximale totale de la station d'abonné (UE) pour les plusieurs codes (EDCH, DCH) et d'autre part la puissance d'émission totale de la station d'abonné (UE) pour les plusieurs codes (EDCH, DCH) au début d'un envoi de message en utilisant un premier (EDCH) des plusieurs codes (EDCH, DCH).

10. Station d'abonné (UE) pour un système de radiocommunication, à laquelle plusieurs codes (EDCH, DCH) sont attribués pour l'envoi de messages,
comprenant des moyens pour déterminer une différence de puissance d'émission qui doit être observée par la station d'abonné (UE) entre d'une part la puissance d'émission maximale totale de la station d'abonné (UE) pour les plusieurs codes (EDCH, DCH) et d'autre part la puissance d'émission totale de la station d'abonné (UE) pour les plusieurs codes (EDCH, DCH) au début d'un envoi de message en utilisant un premier (EDCH) des plusieurs codes (EDCH, DCH).

11. Station d'abonné (UE) pour un système de radiocommunication, notamment selon la revendication 10, à laquelle plusieurs codes (EDCH, DCH) sont attribués pour l'envoi de messages,
comprenant des moyens pour observer une différence de puissance d'émission préalablement déterminée entre d'une part la puissance d'émission maximale totale de la station d'abonné (UE) pour les plusieurs codes (EDCH, DCH) et d'autre part la puissance d'émission totale de la station d'abonné (UE) pour les plusieurs codes (EDCH, DCH) au début d'un envoi de message en utilisant un premier (EDCH) des plusieurs codes (EDCH, DCH).
